# EUROPEAN PATENT APPLICATION

(11) **EP 3 214 299 A2**
(43) Date of publication of application: **06.09.2017**
(21) Application number: 17158009.5
(22) Date of filing: 24.02.2017
(51) Int. Cl.: F02M 55/02

(54) **METHOD TO MANUFACTURE A HIGH PRESSURE FUEL RESERVOIR**

(30) Priority: 01.03.2016 GB 201603532
(71) Applicant: Delphi International Operations Luxembourg S.à r.l., 4940 Bascharage (LU)
(72) Inventor: CICEK, Gunay, 35040 Izmir (TR); PIHAVA, Ernur G., 35535 Izmir (TR); Etienne, Bruno, 37550 Saint Avertin (FR)
(74) Representative: Delphi France SAS

(57) **Abstract**

A method to manufacture a high pressure reservoir (10) adapted to be arranged in a diesel injection system, the reservoir (10) having an elongated body (12) extending along a longitudinal axis (X) from a first extremity (14) to a second extremity (16), the body (12) having a peripheral wall (18) defining an inner axial bore and a plurality of radial holes (22, 24) adapted to be complementary connected to high pressure pipes, the method (100) comprising the initial step:
a) providing a seamless cylindrical steel tube, the central bore of the tube opening at both ends of the tube, said seamless tube forming the blank of the body (12);
characterized in that the method further comprises a subsequent sequence of steps which are all controlled material-removal process steps.

## Description

### TECHNICAL FIELD

The present invention relates to a manufacturing method for a common rail high pressure reservoir of a fuel injection equipment of an internal combustion engine. More precisely, the method is a controlled material-removal process.

### BACKGROUND OF THE INVENTION

A fuel injection equipment comprises a high pressure reservoir, also known as a common rail, adapted to withstand fuel pressurized to 2000 bars or more, said reservoir receiving the pressurized fuel from a pump and delivering the fuel to a plurality of injectors. The reservoir have an elongated body provided with a through bore and also with a plurality of radial holes adapted to be complementarily connected to pipes.

The blank of the body are often forged parts or alternatively, the reservoir can be constituted of several components individually machined then welded together.

In the forged case, the forging operation induces in the steel a heterogeneous microstructure forming lines extending from one end of the blank to the other, holes machining operations happening afterward weakening the structural strength of the rail by cutting said lines.

In the welded case, the welding operations weakens the rail by generating internal stresses concentrated in critical areas of the rail such as around the inlet or outlets.

### SUMMARY OF THE INVENTION

Accordingly, it is an object of the present invention to resolve the above mentioned problems in providing a method to manufacture a high pressure reservoir adapted to be arranged in a diesel injection system. The reservoir has an elongated body extending along a longitudinal axis from a first extremity to a second extremity, the body has a peripheral wall defining an inner axial bore and a plurality of radial holes, adapted to be complementary connected to high pressure pipes, the method comprising the initial step:
a) providing a seamless cylindrical steel tube, the central bore of the tube opening at both ends of the tube, said seamless tube forming the blank of the body.

The method further comprises a subsequent sequence of steps which are all controlled material-removal process steps.

Said step sequence comprises the step:
b) machining the radial holes, the axis of all the holes being in a common plan.

The step b) comprises for each hole, the following:
c) piercing in the wall of the seamless tube a first outer portion opening on the outer face of the tube and extending substantially through half the thickness of the wall;
d) machining at the bottom of the outer portion a tapered sealing face ;
e) piercing at the bottom of the tapered sealing face a restriction hole of small section, said restriction opening in the through bore ;
f) machining a female thread in the outer portion for complementary connection, in use, with male threaded high pressure pipes.

The method further comprises the step:
g) machining the outer face of the tube so that the body comprises a first end portion, a central portion and a second end portion, said three portions, being cylindrical, the end portions, having a smaller cross-section than the central portion.

Step g) is executed so that the two end portions, are cylinders of revolutions about the longitudinal axis .

Step g) further details in that the two end portions, and the through bore are coaxial along the longitudinal axis.

In another embodiment, step g) is executed so the three cylindrical portions, are coaxial about the longitudinal axis.

An advantage of such process is to have lower internal stress level as in the current forged or welded rails. Currently, steel used for forging may be a high grade steel such as a bainitic steel having ultimate tensile strength (UTS) more than 1000 MPa. This type of steel is usually used for high working pressure applications. A technical risk in using this steel is during a Zn-Ni coating as the acid utilized diffuses inside the steel during the coating process. This acid decreases the fatigue life of the material, especially for bainitic steel having UTS > 1000 MPa . Currently an additional heat treatment is applied in order to prevent hydrogen embrittlement of the steel.

Thanks to the invention, utilization of a "low grade steel" is possible. Such a steel can be ferriric, pearlitic stell with UTS inferior 1000 MPa. Zn-Ni coating can be done on such low grade steel without additional heat treatment.

This change process enabling use of low grade steel reduces internal mechanical stresses, it saves material cost and process timing.

The method may further comprise the step:
h) machining a flat face in the seamless tube, the radial holes, opening in said flat face.
i) machining another flat face in the seamless tube, said another flat face being adapted to receive fixation of attachment features.

More particularly, said common plan is perpendicular to the flat face.

The invention further extends to a high pressure reservoir adapted to be arranged in a diesel injection system, the reservoir having an elongated mono-bloc seamless steel body machined from a tube extending along a longitudinal axis from a first extremity to a second extremity. The body has:
- a first end portion, a central portion and a second end portion, the two end portions, having smaller diameters than the central portion and being coaxial with the axial bore of the tube,
- a plurality of radial holes, extending from the axial bore of the tube to the outer face of the central portion, each of the holes being adapted to complementary receive the connection of a high pressure pipe.

The high pressure reservoir is further provided with a flat outer face arranged in the central portion, the radial holes, perpendicularly opening in said flat face.

In an embodiment, the high pressure reservoir is provided with another flat outer face arranged in the central portion.

### BRIEF DESCRIPTION OF THE DRAWINGS

The present invention is now described by way of example with reference to the accompanying drawings in which:
Figure 1 is a high pressure reservoir assembly comprising a reservoir as per the invention.
Figure 2 is a section of the reservoir of figure 1.
Figure 3 is a second embodiment of a reservoir assembly.
Figure 4 is an upside down view of figure 3.
Figure 5 is a detail of figure 3 focusing on attachment features.

### DESCRIPTION OF THE PREFERRED EMBODIMENTS

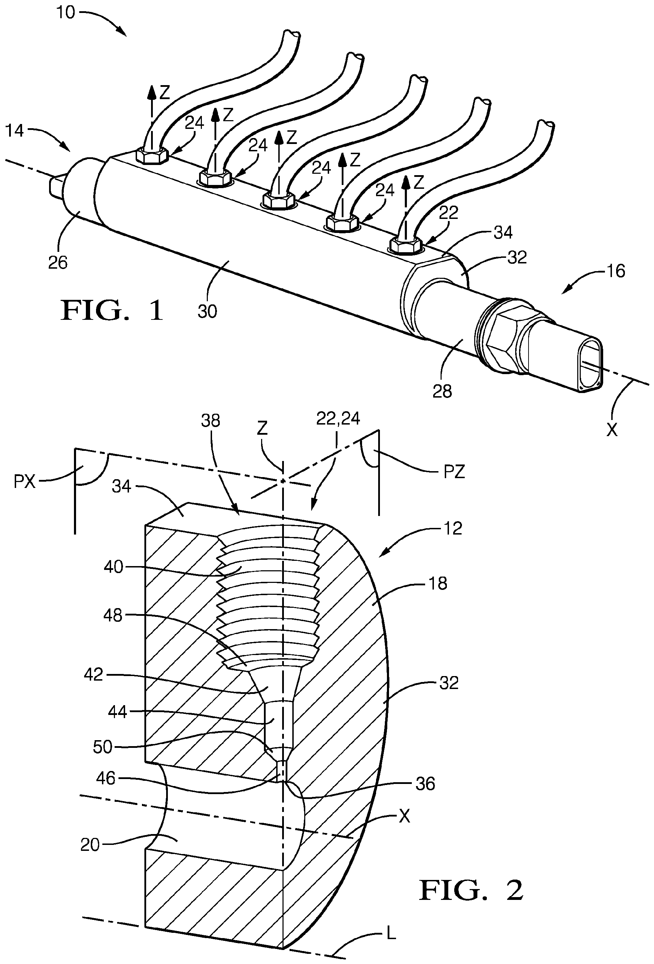

A first embodiment of a high pressure reservoir assembly, represented on figure 1, is adapted to be arranged in a diesel fuel injection equipment wherein fuel pressurized by a pump to 2000 bars, or above, is received and stored in a reservoir 10, also known as a common rail, prior to be delivered to a plurality, four in the presented example, of fuel injectors. Although the example chosen is a diesel common rail, the present invention also applies to gasoline rails or other type of fuel and bio-fuels.

A pressure limiting valve and a pressure sensor are arranged at the extremities of the reservoir 10, the first for avoiding over-internal pressure in the reservoir 10 by controlling the opening of a spill orifice enabling excess fuel to return to a general low pressure tank, the latter for measuring the internal reservoir pressure.

The reservoir 10 is made of steel and it has an elongated body 12 extending along a longitudinal axis X between a first transverse end face 14, or valve end face, where is complementary screwed the pressure limiting valve and, a second transverse end face 16, or sensor end face , where is complementary screwed the pressure sensor. The body 12 has a peripheral wall 18 defining an internal axial through bore 20 opening at both ends 14, 16.

Furthermore, from the bore 20 radially extend through the wall 18 five radial holes 22, 24, one of them being an inlet 22 through which in use pressurized fuel enters in the bore 20, the four other holes being outlets 24 through which said pressurized fuel exits the bore 20 and flows toward the injectors, each hole 22, 24, extending along a radial axis Z, all five axis Z being parallel and co-planar within a common axial plan PX.

Also, the body 12 comprises a first end portion 26 or valve end portion, a central main portion 28 and, a second end portion 30 or sensor end portion. The end portions 26, 28 are coaxial cylinders of revolution around the longitudinal axis X. The bore 20 is also concentric to said end portions 26, 28.

The central portion 30 which is the longest portion of the reservoir, is a cylinder which outer face comprises a rounded face 32 and at least one flat face 34. The cross-section of the rounded face 32 is a cylinder of revolution, a chord of which is the flat face 34. The radial holes 22, 24, perpendicularly open in said flat face 34 and, the end portions 26, 28, have same outer diameter.

In an alternative the central portion 30 is provided with two distinct flat faces, the second flat face (not represented), opposed to the flat face 34, is utilized to enable fixation by screwing of mounting pads, or attachment features, similarly to the ones described below in the second embodiment.

The invention is not limited to the strict embodiment described. Many other alternative embodiments are also part of the invention for instance embodiments where the number of radial holes is more or less than five, depending on the engine on which the rail is to be arranged; also, the inlet and outlet holes described as being radial implying intersection of their respective axis Z with the longitudinal axis X, may indeed be slightly offset the holes opening on a side of the bore rather than in the middle of it; also, the three portions are described tangent to each other while, the portions may in fact not be tangent and separated by step faces.

The radial holes 22, 24, are now detailed in reference to figure 2 which is a quarter section of the body 12 of the rail through the axial common plan PX and also through a radial plan PZ. The hole represented, whether it is the inlet 22 or any of the outlets 24, radially extends through the thicker section of the wall 18 from an inner opening 36 in the bore 20 to, an outer opening 38 in the flat face 34. Indeed, in the lower part of the figure, below the axial bore 20, the axial common plan PX cuts through the thinner part of the wall 18 and, above the bore 20 the axial common plan PX cuts through the thicker part of the wall 18 going from the bore 20 to the flat face 34.

The hole comprises the coaxial alignment along the hole axis Z of an outer portion 40, a seating face 42, a central portion 44 and a final inner restriction 46. The outer portion 40 is a threaded cylindrical hole, the thread not being represented, and, said outer portion 40 extends from the outer opening 38 in the flat face 34 to a shoulder face 48 that is about half way through said thicker section of the peripheral wall 18. From the centre of said shoulder face 48 extends toward the bore 20 the tapered seating face 42 which is a frustoconical face, the section diminishing as said face 42 extends away from the shoulder face 48. The central portion 44 is cylindrical and it axially Z extends toward the bore 20 from said frustoconical face 42 toward a bottom face 50 that is in the vicinity of the bore 20. The final inner restriction 46 extends from said bottom face 50 to the inner opening 36 in the bore 20. Alternative hole geometries are known, for instance holes where the restriction is arranged in the high pressure pipe and no longer in the wall of the rail.

In use the extremity of a high pressure pipe is complementarily fixed in the hole 22, 24, said extremity comprising a seating face in complementary sealing contact with the seating face 42, said sealing contact being assured by a nut that firmly screwed in the outer portion 40.

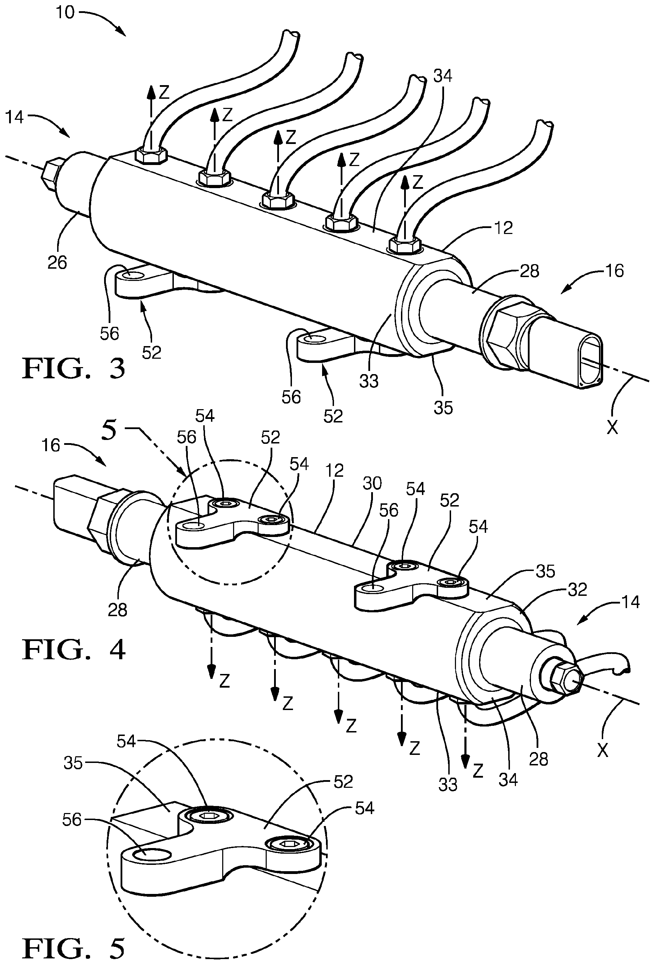

A second embodiment of the reservoir 10 is represented on figures 3, 4 and 5. Main differences of this second embodiment is that the three portions 26, 28, 30, of the reservoir are coaxial extending along the longitudinal axis X. The central portion 30 is provided with two opposite flat faces 34, 35, the previously described flat face 34 wherein open the radial holes and an under flat face 35 particularly adapted to arrange attachment features 52. The central portion 30 of this second embodiment now comprises the two flat faces 34, 35 and also two curved faces 32, 33, which cross-section can be an arc of revolution or a portion of an elliptic curve or any other shape. Alternatively to curved faces, said faces, which can also be identified as side faces could be flat, the central portion 30 having a share, rectangular, hexagonal... cross-section.

The attachment features 52 enable, in use, to attach the reservoir 10 on the engine block. The example of features 52 represented have a T-shape, the top bar of the T enables fixation of the T-feature 52 on the under flat face 35 via two screws 54 complementary tightened in threaded holes machined in the central portion 30 and opening in said under flat face 35. The T-feature 52 is further provided with an third through hole 56 arranged by the bottom end of the central leg of the T, said third hole 56 enabling in use passage of a screw tightened in the engine block therefore fixing the rail on the block.

As can be observed on figures 4 and 5, the reservoir is provided with two T-features 52 symmetrically screwed to the reservoir 10.

The radial holes 22, 24, machined in the reservoir of the second embodiment are similar to the holes described as part of the reservoir of the first embodiment. Figure 2 still applies to the difference that the central bore 20 is coaxial to the outer faces 32, 33, 34, 35, of the central portion.

Similar attachment feature 52 are also screwed on the reservoir 10 of the first embodiment.

The method 100 to manufacture the reservoir is now described, said method being a sequence of controlled material-removal process steps. Initial step is to provide 102 a seamless cylindrical steel tube 104, the central bore 20 of the tube opening at both ends 14, 16, of the tube, said seamless tube 104 forming the blank of the body 12. In a subsequent step, the outer face of the tube 104 is turned 106 so that the body 12 comprises the first end portion 26, the central portion 30 and the second end portion 28. The end portions 26, 28, are cylinders of revolutions of same diameters and are coaxial to the bore 20. The central portion 30 is cylindrical having a larger cross-section than the end portions 26, 28.

In the first embodiment of the reservoir, the central portion 30 has an axis of revolution that is parallel and offset to the longitudinal axis X, the three portions 26, 28, 30. Afterward, the flat face 34 is machined by milling 108 the outer face of the central portion 30, said flat face 34 being parallel to the longitudinal axis X.

In the second embodiment of the reservoir, the central portion 30 is coaxial with the end portion 26, 28. After turning the outer faces, the central portion 30 is machined by milling 108 to provided therein the two opposite flat faces 34, 35.

The radial holes 22, 24, are then machined 110 by piercing the wall of the tube perpendicularly to the flat face 34, starting from the outer portion 40, then the tapered seating face 42, the central portion 44 and the final restriction 46.

Multiple alternatives and variant in the order of the process steps or in the machining technic utilised are of course possible. In any case, a skilled manufacturing person will determine the most appropriate sequence of operation.

As described and visible on the figures, the reservoir 10 is entirely machined by material-removal from the blank seamless tube 104. The reservoir 10 is not subject to any forging nor welding operations. The microstructure of the steel of the reservoir remains unchanged relative to the structure of the original blank tube 104 and therefore, in use, when pressurized to 2000 bars and above, the mechanical strength of said seamless reservoir is enhanced relative to a forged reservoir and machined reservoir or to a welded and machined reservoir.

In a third embodiment not represented, the machining steps of the seamless tube 104 can be limited to the radial holes 22, 24, and the two end portions enabling to arrange the sensor and the valve and also to threaded holes for fixing the attachment features 52. The outer faces of the tube could be left blank, assuming the tube 104 could be provided directly with the required outer profile. The non-machined end portions 26, 28, would in this case add weight to the reservoir.

### LIST OF REFERENCES

- X: longitudinal axis
- Z: inlet / outlet axis
- PX: axial common plan
- PZ: radial plan

- 10: reservoir
- 12: body
- 14: first end face - valve end face
- 16: second end face - sensor end face
- 18: peripheral wall
- 20: bore
- 22: radial hole - inlet
- 24: radial hole - outlet
- 26: first end portion - valve end portion
- 28: second end portion - sensor end portion
- 30: central portion - main portion
- 32: curved face of the central portion
- 33: curved face - second embodiment
- 34: flat face of the central portion
- 35: under flat face - second embodiment
- 36: inner opening
- 38: outer opening
- 40: outer portion
- 42: seating face
- 44: central portion - main portion
- 46: restriction
- 48: shoulder face
- 50: bottom face of the central portion
- 52: attachment features - T-features
- 54: screws
- 56: third hole

- 100: method
- 102: providing step
- 104: seamless tube
- 106: outer face machining
- 108: flat face machining
- 110: radial holes machining

## Claims

1. Method (100) to manufacture a high pressure reservoir (10) adapted to be arranged in a diesel injection system, the reservoir (10) having an elongated body (12) extending along a longitudinal axis (X) from a first extremity (14) to a second extremity (16), the body (12) having a peripheral wall (18) defining an inner axial bore (20) and a plurality of radial holes (22, 24) adapted to be complementary connected to high pressure pipes, the method (100) comprising the initial step:
a) providing a seamless cylindrical steel tube, the central bore (20) of the tube opening at both ends of the tube, said seamless tube forming the blank of the body (12);
**characterized in that** the method (100) further comprises a subsequent sequence of steps which are all controlled material-removal process steps.

2. Method (100) as claimed in claim 1 wherein said step sequence comprises the step:
b) machining the radial holes (22, 24), the axis (Z) of all the holes being in a common plan (PX).

3. Method (100) as claimed in claim 2 wherein step b) comprises for each hole (22, 24) the following:
c) piercing in the wall of the seamless tube a first outer portion (40) opening on the outer face of the tube and extending substantially through half the thickness of the wall;
d) machining at the bottom of the outer portion (40) a tapered sealing face (42);
e) piercing at the bottom of the tapered sealing face a restriction hole of small section, said restriction opening in the through bore (20);
f) machining a female thread in the outer portion (40) for complementary connection, in use, with male threaded high pressure pipes.

4. Method (100) as per any one of the preceding claims further comprising the step:
g) machining the outer face of the tube so that the body comprises a first end portion (26), a central portion (30) and a second end portion (28), said three portions (26, 28, 30) being cylindrical, the end portions (26, 28) having a smaller cross-section than the central portion (30).

5. Method (100) as claimed in claim 4 wherein step g) is executed so that the two end portions (26, 28) are cylinders of revolutions about the longitudinal axis (X).

6. Method (100) as claimed in any one of the claims 4 or 5 wherein step g) further details in that the two end portions (26, 28) and the through bore (20) are coaxial along the longitudinal axis (X).

7. Method (100) as claimed in any one of the claims 4 to 6 wherein step g) is executed so the three cylindrical portions (26, 28, 30) are non-coaxial.

8. Method (100) as claimed in any one of the claims 4 to 6 wherein step g) is executed so the three cylindrical portions (26, 28, 30) are coaxial about the longitudinal axis (X).

9. Method (100) as claimed in any one of the preceding claims further comprising the step:
h) machining a flat face (34) in the seamless tube, the radial holes (22, 24) opening in said flat face (34).

10. Method (100) as claimed in claim 9 further comprising the step:
i) machining another flat face (35) in the seamless tube, said another flat face (35) being adapted to receive fixation of attachment features (52).

11. Method (100) as claimed in any one of the claims 9 or 10, taken in combination with claim 2, wherein said common plan (PX) is perpendicular to the flat face (34).

12. High pressure reservoir (10) adapted to be arranged in a diesel injection system, the reservoir (10) having an elongated mono-bloc seamless steel body (12) machined from a tube extending along a longitudinal axis (X) from a first extremity (14) to a second extremity (16), **characterised in that** the body (12) has:
- a first end portion (26), a central portion (30) and a second end portion (28), the two end portions (26, 28) having smaller diameters than the central portion (30) and being coaxial with the axial bore (20) of the tube,
- a plurality of radial holes (22, 24) extending from the axial bore (20) of the tube to the outer face of the central portion (30), each of the holes being adapted to complementary receive the connection of a high pressure pipe.

13. High pressure reservoir (10) as claimed in claim 12 further provided with a flat outer face (34) arranged in the central portion (30), the radial holes (22, 24) perpendicularly opening in said flat face (34).

14. High pressure reservoir (10) as claimed in claim 13 further provided with another flat outer face (35) arranged in the central portion (30).
